# EUROPÄISCHE PATENTSCHRIFT

(11) **EP 3 912 964 B1**
(45) Veröffentlichungstag und Bekanntmachung des Hinweises auf die Patenterteilung: **05.07.2023**
(21) Anmeldenummer: 21160895.5
(22) Anmeldetag: 05.03.2021
(51) Int. Cl.: C02F 1/04, B01D 5/00, B01D 1/00, B01D 3/34, C02F 103/08, C02F 1/16, C02F 1/14

(54) **VORRICHTUNG ZUR ENTSALZUNG VON MEERWASSER UND EIN VERFAHREN ZUM BETRIEB DER VORRICHTUNG**
DEVICE FOR DESALINATION OF SEA WATER AND METHOD FOR OPERATING THE DEVICE
DISPOSITIF DE DESSALAGE DE L'EAU DE MER ET PROCÉDÉ DE FONCTIONNEMENT DU DISPOSITIF

(30) Priorität: 18.05.2020 DE 102020113392
(43) Veröffentlichungstag der Anmeldung: 24.11.2021
(73) Patentinhaber: TenneT TSO GmbH, 95448 Bayreuth (DE)
(72) Erfinder: Löbermann, Matthias, 31515 Wunstorf (DE)
(74) Vertreter: Scheffler, Jörg

(56) Entgegenhaltungen:
- CN-A- 107 381 695
- US-A1- 2018 106 511
- US-B2- 8 753 487

## Beschreibung

Die Erfindung betrifft eine insbesondere zur Versorgung von auf See oder an der Küste installierten Anlagen zur Energiegewinnung (einschließlich Öl und Gas), Energieumwandlung (P2G, P2C) und Energietransport bestimmte, stationäre Vorrichtung zur Entsalzung von Meerwasser und zur Gewinnung von Brauchwasser durch Verdunsten von Meerwasser und anschließende Kondensation mit einem im Gebrauch stationären Behälter zur Aufnahme eines Meerwasservolumens, dem zur Erwärmung thermische Energie zuführbar ist, sodass es zu einer Verdunstung von Meerwasser innerhalb des Behälters und zu einer Anreicherung der eingeschlossenen Luft mit Feuchtigkeit kommt, wobei die Vorrichtung einen Kondensator mit einer Kondensationsfläche aufweist, an welcher die mit der Feuchtigkeit aus dem Meerwasser angereicherte Luft kondensiert, wobei die Vorrichtung mit einem Kondensatauslass für das Kondensat ausgestattet ist. Weiterhin betrifft die Erfindung ein Verfahren zum Betrieb der Vorrichtung.

Eine solche Vorrichtung dient ganz allgemein der Gewinnung von Brauchwasser durch Entsalzung von Meer- oder Salzwasser oder der Reinigung von verunreinigtem Wasser. Dabei ist die Entsalzung von Meerwasser durch Verdunsten und anschließender Kondensation ein auf der Erde natürlich vorkommendes Verfahrensprinzip. Verdunstung und Kondensation von Wasser in Luft kann unter Nutzung solarer thermischer Energie bei unterschiedlichen Temperaturen und bei unterschiedlichem Umgebungsdruck stattfinden.

Aus der DE 196 21 042 A1 ist eine Anlage zur Entsalzung von Meerwasser bekannt, welche unter Ausnutzung der Sonnenenergie zur Verdunstung und Rekondensation von salzhaltigem Wasser betrieben wird. Aus einem hermetisch abgeschlossenen Verdampferraum wird durch eine Leitung wasserdampfgesättigte Luft mittels eines Ventilators zu einem darunter liegenden, mit Meerwasser gekühlten Kondensator und durch eine weitere Leitung die wasserdampffreie Luft zurück in den Verdampferraum geführt, wobei dem Kondensator eine Sammelvorrichtung für das entsalzte Wasser nachgeschaltet ist. Indem der Verdampferraum teilweise evakuiert wird lässt sich der Wirkungsgrad der Anlage noch verbessern.

Aus der DE 43 40 745 C2 ist eine Vorrichtung bekannt, bei der einem abgeschlossenen Entsalzungsbehälter Wärme zugeführt wird, in dem der natürliche Wasserkreislauf mit Verdunstung und Kondensation nachgebildet wird. Vorgewärmtes Meerwasser wird durch Zufuhr von Solarenergie weiter aufgeheizt und in einem Teil des Entsalzungsbehälters verdunstet, wobei Sole mit aufkonzentriertem Salzgehalt abgeschieden wird. In dem anderen Teil des Entsalzungsbehälters wird der Wasserdampf zur Gewinnung des Destillats bzw. Brauchwassers mittels eines Kühlers kondensiert, dem kaltes Meerwasser als Kühlmedium zugeführt und dieses damit vorgewärmt wird. Diesem Kreislauf wird kaltes Meerwasser und Solarenergie zugeführt und Sole und Brauchwasser abgezogen.

In der DE 42 39 636 A1 wird eine Wasserentsalzungsanlage beschrieben, welche ausschließlich mit Sonneneinstrahlung als Energiequelle betrieben wird und automatisch arbeitet. Die Anlage umfasst ein Verdampfungsgefäß und einen Kondensor, wobei der Verdunstungs- und Kondensationsraum gegenüber der Atmosphäre hermetisch abgeschlossen ist.

Auch bei der in der DE 31 19 615 A1 vorgeschlagenen Lösung zur Meerwasserentsalzung soll die Verdunstung mit anschließender Rekondensation von Meerwasser allein unter Ausnutzung von Sonnenenergie erfolgen. Hierbei wird die erwärmte und mit Feuchtigkeit angereicherte Luft an Oberflächen, die sich unterhalb des Wasserspiegels befinden, gekühlt, wobei sich das Kondensat niederschlägt und in ein Sammelbecken abläuft, bevor die Luft in einem Kamin nach außen abgeleitet wird.

Die EP 2455343 A1 offenbart eine Vorrichtung zum Reinigen von Wasser, wobei Wasser durch ein Zerstäubungsgerät in Tröpfchen geteilt wird und wobei der von den Tröpfchen verdampfte Wasserdampf zu einem Kondensator transportiert wird.

Aus der DE 29 22 348 A1 ist eine turmartige Vorrichtung zur Entsalzung von Meerwasser durch Verdunstung eines Meerwasservolumens und anschließende Kondensation in einem Schacht bekannt, bei dem mittels eines Sonnenkollektors am Boden des Turms Meerwasser erwärmt wird. Dadurch entsteht Wasserdampf, der an einer höher gelegenen Kondensationsfläche kondensiert, sodass das Kondensat aufgefangen werden kann.

Die EP 1 801 075 A1 beschreibt ein Verfahren und eine Vorrichtung zur Entsalzung von Meerwasser, wobei gemäß einer Ausführungsform ein in einem Turm montierter Zusatzlüfter vorgesehen ist, der entsprechend den Umgebungsbedingungen entweder als Lüfter zur Erhöhung der Ansaugkapazität des Turms oder als ein durch den aufsteigenden Luftstrom angetriebener Stromerzeuger betrieben werden kann.

Weiterhin offenbart die DE 2 248 429 A1 eine Einrichtung zur Entsalzung von Meerwasser und gleichzeitigen Gewinnung von Energie. Mittels eines Ejektors oder einer Wasserstrahlpumpe wird ein Teil der Bewegungsenergie des durchfließenden Wassers zum Ansaugen von Luft aus dem Behälter, insbesondere zur Schaffung von Vakuum, genutzt.

Eine weitere Einrichtung zur Entsalzung von Meerwasser wird in US 8 753 487 B2 beschrieben.

Der Erfindung liegt die Aufgabe zugrunde, eine besonders effiziente und nachhaltige Möglichkeit zur Meerwasserentsalzung zu schaffen. Insbesondere soll dabei im Betrieb der Vorrichtung ein vergleichsweise geringer Energieaufwand entstehen.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei welcher der Behälter eine Einlassöffnung für Umgebungsluft aufweist, durch die während der Verdunstung des Meerwassers in den Behälter weitere Umgebungsluft zuführbar ist, und bei der der Behälter eine Auslassöffnung für die mit Feuchtigkeit angereicherte Luft aufweist, die mittels einer als eine Steigleitung ausgeführten Leitung einer Kondensatoreinlassöffnung des Kondensators zuführbar ist, wobei der Kondensator geodätisch mit einem Abstand oberhalb des Behälters angeordnet ist. Dabei kann die Leitung in der Praxis als die einzige Verbindung zwischen dem Kondensator und dem Behälter ausgeführt sein. Weiterhin kann die Leitung bevorzugt als eine Rohrleitung, insbesondere mit einem konstanten Querschnitt bzw. mit konstanter Durchlassweite, oder auch als eine flexible Leitung ausgeführt sein. Hiermit wird erstmals in scheinbar verblüffend einfacher Weise die Effizienz bei der Meerwasserentsalzung wesentlich gesteigert, ohne dass hierzu eine zusätzliche, über die thermische Energie zur Erwärmung des Meerwasservolumens in dem Behälter hinausgehende, äußere Energiezufuhr erforderlich ist. Die Erfindung geht dabei von dem Gedanken aus, dass durch eine kontinuierliche Luftströmung und die ständige Zufuhr von Umgebungsluft die Feuchtigkeit wesentlich effizienter aus dem Meerwasser auf die Luft übertragen werden kann, als dies bei einem geschlossenen Luftvolumen der Fall ist. Anders als solche Überlegungen, die darauf beruhen, durch ein Gebläse eine zwangsgeführte Luftströmung zu erzeugen, wird der Luftstrom erfindungsgemäß durch einen Kamineffekt realisiert, der in einem Abschnitt der Leitung entsteht, der sich an die Auslassöffnung anschließt. Somit ist also die aus dem Behälter abgeführte Luft nicht nur wesentlich mit Feuchtigkeit angereichert, sondern wird durch den thermischen Energieeintrag in das Meerwasservolumen auch erwärmt, sodass es zu dem gewünschten Kamineffekt der aufsteigenden warmen Luft in der Leitung kommt, die dann frische Umgebungsluft nach sich zieht.

Durch den Kamineffekt kommt es wiederum zu einer Vergrößerung bzw. Beschleunigung des in den Behälter eintretenden Volumenstroms der Umgebungsluft, wodurch es zu einer entsprechend optimierten Verdunstung und somit zu der gewünschten Effizienzsteigerung kommt.

Nachdem die Umgebungsluft den Behälter durch die Auslassöffnung verlassen hat, ist die Luft mit Wärme und Wasserdampf angereichert. Die Luft steigt dann in einer Transportstrecke der Leitung durch den Kamineffekt bzw. Kaminzug auf und gewinnt an geodätischer Höhe. Anschließend wird die Luft über eine Abkühlstrecke oder einen Kondensator geleitet, so dass Tauwasser bzw. Kondensat anfallen.

Die Erfindung geht dabei von einer Verdunstung des Meerwasservolumens in dem Behälter aus, sodass die Temperatur des Meerwasservolumens unter der Siedetemperatur bleibt. Erfindungsgemäß sollen aber auch solche Prozesse umfasst sein, bei denen ein Dampfzustand durch Änderung der Temperatur und des Drucks insbesondere durch Erhitzen der Lösung auf Siedetemperatur erreicht wird und es daher zu einem Verdampfen kommt. Demnach umfasst das Merkmal "Verdunster" auch den Begriff des "Verdampfers".

Indem der Kondensator und der Behälter als separate, insbesondere auch austauschbare oder modular erweiterbare Funktionselemente ausgeführt und nur durch die insbesondere unterbrechungsfreie Leitung miteinander verbunden sind, kann der Behälter auch in einer hängenden Anordnung, beispielsweise durch Zugmittel an einer Plattform fixierten Position, insbesondere auch in unterschiedlichen Positionen, einstellbar oder beweglich angebracht werden. So kann die Behälterposition beispielsweise den Gezeiten des Meeres angepasst werden.

Die effizienzsteigernde Luftströmung durch den Behälter und die Leitung bis zu dem Kondensator wird vor allem durch thermischen Auftrieb begünstigt. Besonders vorteilhaft ist jedoch auch eine Ausführungsform der Erfindung, bei welcher die Vorrichtung eine der Kondensatorauslassöffnung zugeordnete Absaugung aufweist, sodass auch der Auslass mit einem Unterdruck beaufschlagt wird. In der Praxis wird so durch den kondensatorseitigen Unterdruck sowie den Kamineffekt in der Leitung eine ständige Zufuhr frischer Umgebungsluft sichergestellt, die anders als beim Stand der Technik nicht durch einen Überdruck auf der Seite der Einlassöffnung erzwungen wird.

Gemäß der Erfindung weist die Vorrichtung zumindest eine von der Umgebungsluft anströmbare Düse nach dem Prinzip der Venturidüse als Bestandteil einer Strahlpumpe auf, deren Saug- oder Abnahmeöffnung mit der Kondensatorauslassöffnung verbunden ist. Hierdurch wird in verblüffend einfacher Weise die im Bereich von Offshore-Windenergieanlagen nahezu ausnahmslos vorhandene Luftströmung der Umgebungsluft genutzt, um im Bereich der Kondensatorauslassöffnung den gewünschten Unterdruck zu erzeugen.

In Abweichung von bisherigen Versuchen, die vorhandene Luftströmung der Umgebungsluft zu nutzen, um dem Behälter Frischluft mit Überdruck zuzuführen, geht die Erfindung von der Überlegung aus, mit Hilfe der Luftströmung nach dem Prinzip der Strahlpumpe einen Unterdruck zu erzeugen, welcher an der Kondensatorauslassöffnung angelegt wird. Dabei kann der im Bereich der Kondensatorauslassöffnung wirkende Unterdruck selbstverständlich angepasst werden, um dadurch die gewünschte Luftströmung in dem Behälter einstellen zu können.

Weiterhin kann die Düse beweglich ausgeführt sein, um diese an die vorherrschende Windrichtung anpassen zu können, wobei die Windrichtungsanpassung vorzugsweise selbsttätig aufgrund der Windanströmung durch eine Windfahne erfolgt und insbesondere keine motorische Verstellung erfordert. Alternativ oder ergänzend kann auch eine Bauform der Düse verwendet werden, die von der Anströmrichtung weitgehend unabhängig ist, indem der Lufteintritt aus allen Richtungen möglich ist. Beispielsweise kann die Düse hierzu zueinander parallel beabstandete, vorzugsweise rotationssymmetrische Formkörper mit einer zentralen konvexen Ausformung aufweisen, die den engsten Düsenquerschnitt begrenzen.

Gemäß der Erfindung ist in dem Behälter zumindest ein flächiges Verdunsterelement angeordnet, dessen unterer Teilbereich in Abhängigkeit des Füllstands abschnittsweise in das Meerwasservolumen in dem Behälter eintaucht und dessen oberhalb des Füllstandes liegender, von der zugeführten Umgebungsluft anströmbarer oberer Teilbereich die wirksame Verdunstungsfläche bildet. Hierdurch wird die Verdunstungsfläche mit geringem Aufwand wesentlich vergrößert, indem der obere Teilbereich des Verdunsterelements zyklisch bei Flut von dem einströmenden Meerwasser getränkt wird und bei sinkendem Wasserstand als Reservoir oder Feuchtigkeitsspeicher oberhalb des Füllstands der Anströmung durch Umgebungsluft ausgesetzt ist.

Dabei hat sich eine weitere Ausgestaltungsform der Erfindung als besonders Erfolg versprechend erwiesen, bei welcher zumindest ein Verdunsterelement zumindest abschnittsweise ein Material mit saugfähigen oder flüssigkeitsspeichernden Eigenschaften, insbesondere aus kapillaren und/oder hygroskopischen Eigenschaften aufweist, sodass auch dann ein wesentlicher Flüssigkeitsanteil aus dem Meerwasservolumen in dem Behälter in den oberen Teilbereich des Verdunsterelements aufsteigt, wenn sich der Füllstand, beispielsweise außerhalb von Gezeitengewässern, nicht oder lediglich geringfügig ändert. Dabei können die Verdunsterelemente beispielsweise auch beweglich, beispielsweise an einer um eine horizontale Achse rotierenden Trommel in dem Behälter angeordnet sein, sodass diese zyklisch in das Meerwasservolumen eingetaucht werden. Selbstverständlich kann auch die hierfür erforderliche Antriebsenergie beispielsweise aus der Meeres- oder Luftströmung gewonnen werden. Dabei kann als Verdunsterelement beispielsweise auch ein handelsübliches Fasergewebe oder -gewirke zum Einsatz kommen.

Besonders bevorzugt weist das Verdunsterelement mehrere zueinander insbesondere parallel beabstandete Verdunstungsflächen auf, die insbesondere parallel zu einer Luftströmung zwischen der Einlassöffnung und der Auslassöffnung des Behälters orientiert sind. Hierdurch erfolgt die Luftströmung entlang der Verdunsterelemente, ohne dass die Luftströmung hierdurch behindert oder beeinträchtigt wird. Durch die parallel zur Oberfläche des Verdunsterelements entlang geführte Luft erfolgt eine schnelle Feuchtigkeitsaufnahme.

Der Behälter könnte höhenverstellbar sein, um so bedarfsweise das Flächenverhältnis zwischen dem oberen und unteren Teilbereich des Verdunsterelements anpassen zu können oder aber das Verdunsterelement zumindest teilweise zyklisch in das Meerwasservolumen einzutauchen.

Durch das Eintauchen des Verdunsterelements bilden sich Rückstände von gelösten Salzen des Meerwassers. Diese werden durch zweitweises Eintauchen in das Meerwasservolumen gelöst und durch Spülen des Behälters ausgetragen. In besonders vorteilhafter Weise erfolgt dieses zyklische Spülen und Ablösen dadurch, dass der Behälter mit dem darin angeordneten Verdunsterelement derart an einem Träger der Vorrichtung mit einer Eintauchtiefe im Meerwasser so positioniert ist, dass zumindest der geodätisch obere Teilbereich des Verdunsterelements unterhalb des maximalen Tidenhochwassers (HAT = Highest Astronomical Tide) bzw. unterhalb des Hochwassers bei Springzeit liegt. Weiterhin kann der Behälter auch so ausgeführt sein, dass dieser bei Niedrigwasser zur Springzeit vollständig ausgetauscht wird, um so für eine natürliche, regelmäßige Erneuerung des enthaltenen Meerwasservolumens zu sorgen und zugleich den Bewuchs der Bauelemente zu reduzieren.

Dabei ist der Behälter im Bereich des Tidenhubs derart angeordnet, dass der Füllstand innerhalb des Behälters tidenabhängig schwankt, hingegen der Behälter im normalen Betrieb nicht vollständig gefüllt ist.

Die zur Erwärmung des Meerwasservolumens erforderliche thermische Energie entsteht beispielsweise durch eine solare Vorwärmung in einem Sonnenkollektor, welcher wiederum ohne weitere Energiezufuhr allein durch Nutzung von Meeres- oder Gezeitenströmung befüllbar ist. Die Verdunstung des neu zugeführten, erwärmten Meerwassers beginnt in dem Behälter daher ohne unerwünschte Verzögerung. Besonders praxisgerecht ist es hingegen, wenn dem Behälter und/oder einem Meerwassereinlass für Meerwasser ein Wärmetauscher für zugeführte Abwärme und/oder eine elektrische Heizeinrichtung zugeordnet ist. Sowohl die elektrische Heizeinrichtung als auch der Wärmetauscher, beispielsweise zur Übertragung der Abwärme einer Leistungselektronik der Windenergieanlage, der Transformatorstation oder der Offshore-HGÜ-Umrichter können in das (Netz-)Regelungskonzept der Windenergieanlage bzw. des Offshore-Windparks zur Dämpfung von Lastspitzen einbezogen werden, sodass die thermische Energie als Nebenprodukt bei der Stromerzeugung nutzbar wird. Ein solcher Wärmetauscher kann beispielsweise als Gleichstrom-, Kreuzstrom-, Kreuzgegenstrom oder Gegenstrom-Wärmeaustauscher ausgebildet sein und eine Vielzahl von Platten oder Röhren aufweisen.

Besonders bevorzugt ist der Behälter thermisch isoliert, um eine effiziente Erwärmung des Meerwasservolumens zu erreichen und Wärmeverluste zu minimieren.

Dabei hat es sich auch bereits als besonders zweckmäßig erwiesen, wenn der Behälter zumindest einen Meerwassereinlass und zumindest einen räumlich hierzu beabstandeten Meerwasserauslass aufweist, um so eine wirksame Durchströmung zur Spülung des Behälters zu ermöglichen. Selbstverständlich können dem Meerwassereinlass und/oder - auslass auch Verschlusselemente zur Reduzierung oder Unterbrechung des Durchflusses zugeordnet sein. Der Meerwassereinlass kann zudem auch an einem Steigrohr angeordnet sein, dessen Öffnung geodätisch mit einer beispielsweise auch einstellbaren Höhe oberhalb des Meerwasserauslasses angeordnet ist, um so das während des Gezeitenwechsels eintretende Meerwasservolumen zu beschränken.

Eine besonders praxisnahe Ausgestaltungsform der Erfindung wird auch dadurch erreicht, dass dem Kondensator zumindest ein Kühlelement zugeordnet ist, um die Kondensation zu beschleunigen. Hierzu kann ein von der Umgebungsluft oder dem Meerwasser anströmbarer Wärmetauscher verwendet werden.

Die Erfindung wird weiterhin noch mit einem Verfahren zum Betrieb der Vorrichtung durch einen relativen Unterdruck in dem Behälter gegenüber der Umgebung gelöst, indem eine Luftströmung im Bereich der Auslassöffnung zwischen der Einlassöffnung des Behälters erzeugt wird, wobei der Unterdruck durch eine Strahlpumpe erzeugt wird, wobei die Strömung der Umgebungsluft als Treibmedium und die aus dem Behälter austretende Luft als Saugmedium der Strahlpumpe dienen.

Dabei kann der Prozess sowohl kontinuierlich als auch zyklisch betrieben werden, indem zunächst dem Behälter Meerwasser bis zu einem Soll-Füllstand des Meerwasservolumens zugeführt wird, dann bei einem zumindest im Wesentlichen unveränderten Füllstand in dem Behälter das Meerwasservolumen in dem Behälter erwärmt wird, um so die Verdunstung zu beschleunigen, und schließlich bei fallendem Füllstand in dem Behälter oder bei Erreichen einer Obergrenze der Anreicherung des Salzgehalts in dem Meerwasservolumen weiteres Meerwasser nachgefüllt bzw. vorhandenes Meerwasservolumen ausgetauscht wird.

Über die Entsalzung von Meerwasser mittels der Vorrichtung hinaus kann das gewonnene Kondensat auch zur Herstellung von Wasserstoff genutzt werden, sodass die erfindungsgemäße Vorrichtung eine Prozessstufe zur Herstellung von Wasserstoff auf See bilden kann. Zumindest wird der Aufwand zur Herstellung von Reinstwasser im Vergleich zu Umkehrosmoseanlagen erheblich reduziert.

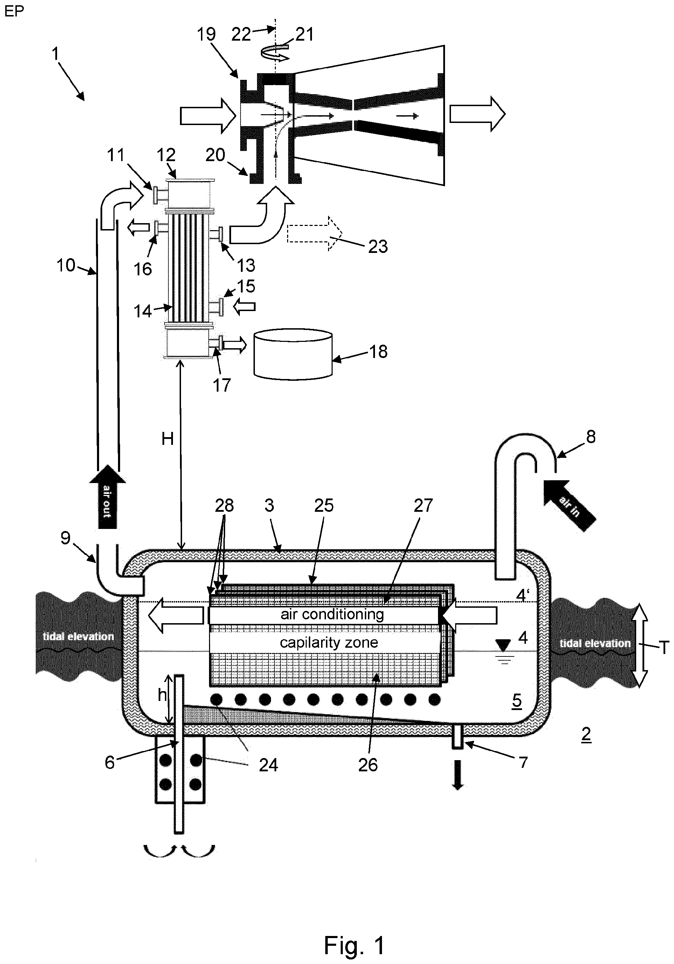

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung eine teilweise geschnittene Ansicht einer zur Versorgung von auf See oder an der Küste installierten Anlagen zur Energiegewinnung (einschließlich Öl und Gas), Energieumwandlung (P2G, P2C) und Energietransport bestimmten Vorrichtung 1 zur Entsalzung von Meerwasser 2 und zur Gewinnung von Brauchwasser aus dem gewonnenen Kondensat. Die Vorrichtung 1 hat einen thermisch isolierten Behälter 3, der bis zu einem variablen Füllstand 4 mit einem Meerwasservolumen 5 gefüllt ist. Hierzu hat der Behälter 3 einen als Tauchrohr ausgeführten Meerwassereinlass 6 für Meerwasser 2 und einen Meerwasserauslass 7 für das Meerwasservolumen 5 sowie eine Einlassöffnung 8 für Umgebungsluft, durch die während eines Verdunstungsprozesses des Meerwasservolumens 5 stetig frische Umgebungsluft zuführbar ist. Die so mit Feuchtigkeit gesättigte oder angereicherte Luft wird durch eine Auslassöffnung 9 mittels einer als Steigleitung ausgeführten Leitung 10 durch eine Kondensatoreinlassöffnung 11 einem mit einem geodätischen Abstand H oberhalb des Behälters 3 angeordneten Kondensator 12 zugeführt. Anschließend wird die getrocknete Luft durch eine Kondensatorauslassöffnung 13 in die Umgebung abgeführt. In an sich bekannter Weise entsteht der Kondensationsprozess in dem Kondensator 12 durch Abkühlung mittels eines ein Kühlelement 14 des Kondensators 12 durchströmenden flüssigen oder gasförmigen Kühlmittels, beispielsweise Meerwasser oder Umgebungsluft, und lässt sich auf diese Weise steuern. Zu diesem Zweck sind ein Kühlmitteleinlass 15 und ein Kühlmittelauslass 16 vorgesehen. Das gewonnene Kondensat als Brauchwasser wird durch einen Kondensatauslass 17 abgeführt und gegebenenfalls einem Kondensatsammelbecken 18 oder unmittelbar einer weiteren Verwendung zugeführt.

Ein wesentlicher Aspekt der Erfindung ist dabei die stetige Durchströmung des Behälters 3 mit der zugeführten Umgebungsluft, die einerseits durch die als Steigrohr ausgeführte Leitung 10 zu dem geodätisch oberhalb des Behälters 3 angeordneten Kondensator 12 bewirkt wird. Dabei wird die im Behälter 3 erwärmte, in der Leitung 10 aufsteigende Luft durch den Kamineffekt bzw. Kaminzug beschleunigt, sodass ein Unterdruck entsteht.

Andererseits wird die Durchströmung auch noch dadurch optimiert, dass die Kondensatorauslassöffnung 13 mit einer Strahlpumpe 19 derart verbunden ist, dass die aus der Kondensatorauslassöffnung 13 austretende Luft von dieser durch eine Saugöffnung 20 der Strahlpumpe 19 angesaugt wird. Als Treibmedium dient dabei die Luftströmung der Umgebungsluft, die bei Offshore-Windenergieanlagen nahezu immer vorhanden ist. Durch diese beiden alternativen oder kombinierten Maßnahmen entsteht im Bereich der Auslassöffnung 9 ein relativer Unterdruck, welcher weitere Umgebungsluft durch die Einlassöffnung 8 ansaugt. Selbstverständlich lässt sich der relative Unterdruck mittels der Strahlpumpe 19 steuern, deren Anströmung durch die Umgebungsluft beispielsweise durch eine Schwenkbewegung 21 um eine vertikale Achse 22 veränderbar ist, insbesondere also der Windrichtung mit einer Windfahne angepasst werden kann.

Ausgehend von der erfindungsgemäßen Lösung zur Effizienzsteigerung durch die Verbesserung der Durchströmung der zugeführten Umgebungsluft, die dabei ohne zusätzliche elektrische Pumpen oder Ventilatoren auskommt, lässt sich die Vorrichtung 1 grundsätzlich auch bei vorhandenen Behältern 3 für das Meerwasser in entsprechender Weise nachrüsten.

Die Erfindung geht jedoch über diese Erkenntnis hinaus, indem der Behälter 3 in einer Höhe bezogen auf den Meeresspiegel des umgebenden Meerwassers 2 angeordnet ist, die zu einem schwankenden Füllstand 4 innerhalb des Behälters 3 führt. Somit folgt der Füllstand 4 den Gezeiten, wobei der Meerwassereinlass 6 für Meerwasser 2 wie dargestellt als Tauchrohr ausgeführt sein kann und bis zu einer über dem Bodenniveau liegenden Höhe h in den Behälter 3 hineinreicht. Dadurch wird der Zulauf des frischen Meerwassers 2 auf eine kurze zeitliche Periode vor und nach dem höchsten Wasserstand während der Flut beschränkt. Da somit das Meerwasservolumen 5 keinem ständigen Austausch unterliegt kann die zur Erwärmung erforderliche thermische Energiezufuhr reduziert werden. Die Erwärmung erfolgt mittels eines lediglich andeutungsweise dargestellten Heizelements 24, welches wahlweise elektrisch betrieben oder als Wärmetauscher durch die Abwärme elektrischer Komponenten oder durch solare Strahlung mit thermischer Energie versorgt werden kann. Nicht gezeigt ist eine Vorwärmung des Austauschvolumens des Meerwassers 2 in einem separaten Vorwärmbehälter, um so die Temperatur innerhalb des Behälters 3 vor und nach dem Austausch des Meerwasservolumens 5 und damit den Verdunstungsprozess konstant zu halten.

Innerhalb des Behälters 3 ist ein Verdunsterelement 25 mit mehreren sowohl zueinander als auch zu der Luftströmung zwischen der Einlassöffnung 8 und der Auslassöffnung 9 parallel angeordneten Verdunstungsflächen 28 vorgesehen. Wie zu erkennen taucht ein in seiner Größe variabler, unterer Teilbereich 26 des Verdunsterelements 25 in Abhängigkeit des Füllstands 4 in das Meerwasservolumen 5 in dem Behälter 3 ein während der oberhalb des Füllstands 4 liegende obere Teilbereich 27 die wirksame Verdunstungsfläche bildet. Indem das Verdunsterelement 25 zumindest abschnittsweise aus einem Material mit kapillaren oder hygroskopischen Eigenschaften besteht, wird infolge der Verdunstung in dem oberen Teilbereich stets weitere Flüssigkeit angesaugt.

Es hat sich bereits gezeigt, dass sich infolge der Verdunstung Rückstände von gelösten Salzen des Meerwassers 2 in dem oberen Teilbereich 27 ablagern, welche den weiteren Verdunstungsprozess beeinträchtigen können. Hier erweist sich die Anordnung des Behälters 3 im Bereich des Tidenhubs, insbesondere des maximalen Tidenhubs der Springtide, als besonders zweckmäßig. Während der Springflut steigt der Füllstand 4 bis zu einem oberen Füllstand 4' innerhalb des Behälters soweit an, dass das Verdunsterelement 25 vollständig oder nahezu vollständig in das Meerwasservolumen 5 eintaucht, wodurch Anhaftungen abgelöst und durch Spülen des Behälters 3 ausgetragen werden.

### BEZUGSZEICHENLISTE

| | | | |
|---|---|---|---|
| 1 | Vorrichtung | 16 | Kühlmittelauslass |
| 2 | Meerwasser | 17 | Kondensatauslass |
| 3 | Behälter | 18 | Kondensatsammelbecken |
| 4, 4' | Füllstand | 19 | Strahlpumpe |
| 5 | Meerwasservolumen | 20 | Saugöffnung |
| 6 | Meerwassereinlass | 21 | Schwenkbewegung |
| 7 | Meerwasserauslass | 22 | Achse |
| 8 | Einlassöffnung | 23 | Bypass |
| 9 | Auslassöffnung | 24 | Heizelement |
| 10 | Leitung | 25 | Verdunsterelement |
| 11 | Kondensatoreinlassöffnung | 26 | Teilbereich |
| 12 | Kondensator | 27 | Teilbereich |
| 13 | Kondensatorauslassöffnung | 28 | Verdunstungsfläche |
| 14 | Kühlelement | | |
| 15 | Kühlmitteleinlass | T | Tidenhub |
| | | h | Höhe |
| | | H | Abstand |

## Patentansprüche

1. Vorrichtung (1) zur Entsalzung von Meerwasser (2) durch Verdunstung eines Meerwasservolumens (5) und anschließende Kondensation mit einem im Gebrauch stationären Behälter (3) zur Aufnahme des Meerwasservolumens (5), dem zur Erwärmung thermische Energie zuführbar ist, sodass es zu einer Verdunstung des Meerwasservolumens (5) innerhalb des Behälters (3) und zu einer Anreicherung der eingeschlossenen Luft mit Feuchtigkeit kommt, wobei der Behälter (3) zumindest einen Meerwassereinlass (6) für Meerwasser (2) und zumindest einen Meerwasserauslass (7) aufweist, und mit einem Kondensator (12), der eine Kondensationsfläche, an welcher die mit der Feuchtigkeit angereicherte Luft kondensiert, und einen Kondensatauslass (17) für das Kondensat aufweist, wobei der Kondensator (12) und der Behälter (3) räumlich beabstandet und durch eine Leitung (10) miteinander verbunden sind und dass der Behälter (3) eine Einlassöffnung (8) für Umgebungsluft aufweist, durch die während der Verdunstung des Meerwasservolumens (5) frische Umgebungsluft in den Behälter (3) zuführbar ist, und dass der Behälter (3) eine Auslassöffnung (9) für die mit Feuchtigkeit angereicherte Luft aufweist, die mittels der Leitung (10) einer Kondensatoreinlassöffnung (11) des Kondensators (12) zuführbar ist, wobei der Kondensator (12) geodätisch mit einem Abstand (H) oberhalb des Behälters (3) angeordnet ist, **dadurch gekennzeichnet, dass** die Vorrichtung (1) eine einer Kondensatorauslassöffnung (13) des Kondensators (12) zugeordnete Absaugung und zumindest eine von der Umgebungsluft anströmbare Strahlpumpe (19) aufweist, deren Saugöffnung (20) mit der Kondensatorauslassöffnung (13) verbunden ist, und dass in dem Behälter (3) zumindest ein flächiges Verdunsterelement (25) angeordnet ist, dessen unterer Teilbereich (26) abschnittsweise in das Meerwasservolumen (5) in dem Behälter (3) eintaucht und dessen oberhalb des Füllstands (4) liegender oberer Teilbereich (27) die wirksame Verdunstungsfläche bildet.

2. Vorrichtung (1) nach Anspruch 1, **dadurch gekennzeichnet, dass** zumindest ein Verdunsterelement (25) zumindest abschnittsweise ein Material mit saugfähigen oder flüssigkeitsspeichernden, insbesondere kapillaren und/oder hygroskopischen Eigenschaften aufweist.

3. Vorrichtung (1) nach Anspruch 2, **dadurch gekennzeichnet, dass** das Verdunsterelement (25) mehrere zueinander insbesondere parallel beabstandete Verdunstungsflächen (28) aufweist, die insbesondere parallel zu einer Luftströmung zwischen der Einlassöffnung (8) und der Auslassöffnung (9) des Behälters (3) orientiert sind.

4. Vorrichtung (1) nach zumindest einem der vorhergehenden Ansprüche, **dadurch gekennzeichnet, dass** der Behälter (3) derart positioniert ist, dass der Füllstand (4, 4`) innerhalb des Behälters (3) tidenabhängig schwankt.

5. Vorrichtung (1) nach zumindest einem der vorhergehenden Ansprüche, **dadurch gekennzeichnet, dass** die Vorrichtung ein dem Behälter (3) und/oder dem Meerwassereinlass (6) für Meerwasser (2) zugeordnetes Heizelement (24) mit einem Wärmetauscher für zugeführte Abwärme und/oder mit einer elektrischen Heizeinrichtung aufweist.

6. Vorrichtung (1) nach zumindest einem der vorhergehenden Ansprüche, **dadurch gekennzeichnet, dass** der Meerwassereinlass (6) räumlich beabstandet mit einer abweichenden geodätischen Höhe zu dem Meerwasserauslass (7) angeordnet ist.

7. Vorrichtung (1) nach zumindest einem der vorhergehenden Ansprüche, **dadurch gekennzeichnet, dass** die Leitung (10) den Kondensator (12) und den Behälter (3) unterbrechungsfrei miteinander verbindet.

8. Vorrichtung (1) nach zumindest einem der vorhergehenden Ansprüche, **dadurch gekennzeichnet, dass** die Leitung (10) als eine Rohrleitung mit einer insbesondere konstanten Querschnittsfläche und/oder Durchlassöffnung ausgeführt ist.

9. Vorrichtung (1) nach zumindest einem der vorhergehenden Ansprüche, **dadurch gekennzeichnet, dass** der Kondensator (12) und der Behälter (3) als räumlich getrennte Funktionselemente ausgeführt sind.

10. Vorrichtung (1) nach zumindest einem der vorhergehenden Ansprüche, **dadurch gekennzeichnet, dass** der Kondensator (12) in verschiedenen Positionen und/oder Orientierungen mit unterschiedlichem Abstand (H) zu dem Behälter (3) festlegbar ist.

11. Verfahren zur Anwendung bei der Vorrichtung (1) nach zumindest einem der vorhergehenden Ansprüche, **dadurch gekennzeichnet, dass** ein relativer Unterdruck in dem Behälter (3) gegenüber der Umgebung und dadurch eine Luftströmung in dem Behälter (3) zwischen der Einlassöffnung (8) und der Auslassöffnung (9) des Behälters (3) erzeugt wird, und dass der Unterdruck durch eine Strahlpumpe (19) erzeugt wird, wobei die Strömung der Umgebungsluft als Treibmedium und die aus dem Behälter (3) austretende Luft als Saugmedium der Strahlpumpe (19) dient.

## Claims

1. Device (1) for desalination of seawater (2) by way of evaporation of a seawater volume (5) and subsequent condensation, with a container (3) which is stationary during use and serves for accommodating the seawater volume (5), to which, for heating purposes, thermal energy is able to be fed such that evaporation of the seawater volume (5) within the container (3) and enrichment of the enclosed air with moisture occurs, wherein the container (3) has at least one seawater inlet (6) for seawater (2) and at least one seawater outlet (7), and with a condenser (12) which has a condensation surface on which the moisture-enriched air condenses, and has a condensate outlet (17) for the condensate, wherein the condenser (12) and the container (3) are a spatial distance apart and are connected to one another by a line (10), and the container (3) has an inlet opening (8) for ambient air through which fresh ambient air is able to be fed into the container (3) during the evaporation of the seawater volume (5), and the container (3) has an outlet opening (9) for the moisture-enriched air, which is able to be fed to a condenser-inlet opening (11) of the condenser (12) by means of the line (10), wherein the condenser (12) is arranged geodetically at a distance (H) above the container (3), **characterized in that** the device (1) has a suction-extraction means which is assigned to a condenser-outlet opening (13) of the condenser (12), and has at least one jet pump (19) for which impingement by the ambient air is possible and whose suction opening (20) is connected to the condenser-outlet opening (13), and **in that**, in the container (3), there is arranged at least one areal evaporator element (25) whose lower sub-region (26) is sectionally immersed in the seawater volume (5) in the container (3) and whose upper sub-region (27), which is situated above the fill level (4), forms the effective evaporation surface.

2. Device (1) according to Claim 1, **characterized in that** at least one evaporator element (25) at least sectionally comprises a material with absorbent or liquid-storing, in particular capillary and/or hygroscopic, properties.

3. Device (1) according to Claim 2, **characterized in that** the evaporator element (25) has multiple evaporation surfaces (28) which are spaced apart, in particular in a parallel manner, from one another and which are oriented in particular parallel to an air flow between the inlet opening (8) and the outlet opening (9) of the container (3).

4. Device (1) according to at least one of the preceding claims, **characterized in that** the container (3) is positioned in such a way that the fill level (4, 4') within the container (3) varies in a tide-dependent manner.

5. Device (1) according to at least one of the preceding claims, **characterized in that** the device has a heating element (24) with a heat exchanger for fed waste heat and/or with an electrical heating device, which heating element is assigned to the container (3) and/or to the seawater inlet (6) for seawater (2).

6. Device (1) according to at least one of the preceding claims, **characterized in that** the seawater inlet (6) is arranged so as to be a spatial distance apart from the seawater outlet (7) and with a different geodetic height in relation thereto.

7. Device (1) according to at least one of the preceding claims, **characterized in that** the line (10) connects the condenser (12) and the container (3) to one another in an interruption-free manner.

8. Device (1) according to at least one of the preceding claims, **characterized in that** the line (10) is designed as a pipeline with an in particular constant cross-sectional area and/or throughopening.

9. Device (1) according to at least one of the preceding claims, **characterized in that** the condenser (12) and the container (3) are designed as spatially separate functional elements.

10. Device (1) according to at least one of the preceding claims, **characterized in that** the condenser (12) is fixable in various positions and/or orientations with a different distance (H) from the container (3).

11. Method for use with the device (1) according to at least one of the preceding claims, **characterized in that** a relative underpressure in the container (3) with respect to the surroundings and, as a result, an air flow in the container (3) between the inlet opening (8) and the outlet opening (9) of the container (3) is generated, and **in that** the underpressure is generated by a jet pump (19), wherein the flow of the ambient air serves as motive medium and the air exiting the container (3) serves as suction medium of the jet pump (19).

## Revendications

1. Dispositif (1) de dessalement de l'eau de mer (2) par évaporation d'un volume d'eau de mer (5) suivie d'une condensation, ledit dispositif comprenant un récipient (3), immobile en utilisation, qui est destiné à recevoir le volume d'eau de mer (5) et auquel de l'énergie thermique peut être amenée pour le chauffer, de sorte qu'il se produit une évaporation du volume d'eau de mer (5) à l'intérieur du récipient (3) et un enrichissement en humidité de l'air enfermé, le récipient (3) comportant au moins une entrée d'eau de mer (6) destinée à l'eau de mer (2) et au moins une sortie d'eau de mer (7), et comprenant un condenseur (12), qui comporte une surface de condensation au niveau de laquelle l'air enrichi en humidité se condense, et une sortie de condensat (17) destinée au condensat, le condenseur (12) et le récipient (3) étant spatialement espacés et reliés l'un à l'autre par une conduite (10) et le récipient (3) comportant une ouverture d'entrée (8), qui est destinée à l'air ambiant et par laquelle, pendant l'évaporation du volume d'eau de mer (5), de l'air ambiant frais peut être amené dans le récipient (3), et le récipient (3) comportant une ouverture de sortie (9) destinée à l'air enrichi en humidité qui peut être amené à une ouverture d'entrée de condenseur (11) du condenseur (12) au moyen de la conduite (10), le condenseur (12) étant disposé géodésiquement à une distance (H) au-dessus du récipient (3), **caractérisé en ce que** le dispositif (1) comporte une aspiration associée à une ouverture de sortie de condenseur (13) du condenseur (12) et au moins une pompe à jet (19) qui peut être traversée par l'air ambiant et dont l'ouverture d'aspiration (20) est reliée à l'ouverture de sortie de condenseur (13), et **en ce qu'**au moins un élément d'évaporation (25) sensiblement bidimensionnel est disposé dans le récipient (3), élément d'évaporation dont la partie inférieure (26) est plongée par portions dans le volume d'eau de mer (5) dans le récipient (3) et dont la partie supérieure (27), qui est située au-dessus du niveau de remplissage (4), forme la surface d'évaporation effective.

2. Dispositif (1) selon la revendication 1, **caractérisé en ce qu'**au moins un élément d'évaporation (25) comporte au moins par portion un matériau présentant des propriétés absorbantes ou de stockage de liquides, notamment capillaires et/ou hygroscopiques.

3. Dispositif (1) selon la revendication 2, **caractérisé en ce que** l'élément d'évaporation (25) comporte une pluralité de surfaces d'évaporation (28) espacées les unes des autres, notamment parallèlement, qui sont orientées parallèlement à un flux d'air entre l'ouverture d'entrée (8) et l'ouverture de sortie (9) du récipient (3).

4. Dispositif (1) selon l'une au moins des revendications précédentes, **caractérisé en ce que** le récipient (3) est positionné de manière que le niveau de remplissage (4, 4') à l'intérieur du récipient (3) varie en fonction de la marée.

5. Dispositif (1) selon l'une au moins des revendications précédentes, **caractérisé en ce que** le dispositif comporte un élément chauffant (24) associé au récipient (3) et/ou à l'entrée d'eau de mer (6) destinée à l'eau de mer (2) et comprenant un échangeur de chaleur destiné à la chaleur perdue fournie et/ou un dispositif de chauffage électrique.

6. Dispositif (1) selon l'une au moins des revendications précédentes, **caractérisé en ce que** l'entrée d'eau de mer (6) est disposée à une distance spatiale de la sortie d'eau de mer (7) avec une hauteur géodésique différente.

7. Dispositif (1) selon l'une au moins des revendications précédentes, **caractérisé en ce que** la conduite (10) relie le condenseur (12) et le récipient (3) l'un à l'autre sans interruption.

8. Dispositif (1) selon l'une au moins des revendications précédentes, **caractérisé en ce que** la conduite (10) est réalisée sous la forme d'une canalisation ayant une section transversale et/ou une ouverture de passage notamment constantes.

9. Dispositif (1) selon l'une au moins des revendications précédentes, **caractérisé en ce que** le condenseur (12) et le récipient (3) sont conçus comme des éléments fonctionnels spatialement séparés.

10. Dispositif (1) selon l'une au moins des revendications précédentes, **caractérisé en ce que** le condenseur (12) peut être fixé dans différentes positions et/ou orientations avec différentes distances (H) au récipient (3).

11. Procédé pour utilisation avec le dispositif (1) selon l'une au moins des revendications précédentes, **caractérisé en ce qu'**une dépression relative dans le récipient (3) par rapport à l'environnement et ainsi un flux d'air sont générés dans le récipient (3) entre l'ouverture d'entrée (8) et l'ouverture de sortie (9) du récipient (3), et **en ce que** la dépression est générée par une pompe à jet (19), le flux d'air ambiant servant de milieu propulseur et l'air sortant du récipient (3) servant de milieu d'aspiration de la pompe à jet (19).
